# EUROPEAN PATENT APPLICATION

(11) **EP 2 955 827 A1**
(43) Date of publication of application: **16.12.2015**
(21) Application number: 15169855.2
(22) Date of filing: 29.05.2015
(51) Int. Cl.: H02M 1/36, H02M 7/797, H02M 1/12, H02M 1/00

(54) **METHOD FOR CHARGING CAPACITANCE CONNECTED BETWEEN DC POLES OF THREE-PHASE ACTIVE RECTIFIER/INVERTER AND CONVERTER APPARATUS**

(30) Priority: 11.06.2014 FI 20145540
(71) Applicant: ABB Technology Oy, 00380 Helsinki (FI)
(72) Inventor: Talja, Markku, 00380 Helsinki (FI); Hakala, Veikko, 02600 Espoo (FI)
(74) Representative: Kolster Oy Ab

(57) **Abstract**

A method for charging a capacitance connected between DC poles of a three-phase active rectifier/inverter and a converter apparatus comprising a three-phase active rectifier/inverter (10) having a capacitance (C_{DC}) connected between DC poles thereof, a three-phase filter (20) and a three-phase stepdown transformer (T), wherein the active rectifier/inverter (10) is configured to charge the capacitance (C_{DC}) connected between the DC poles of the active rectifier/inverter with a rectified secondary voltage of the transformer (T) until a voltage of the capacitance reaches a first predetermined threshold voltage, and, in response to the voltage of the capacitance (C_{DC}) connected between the DC poles of the active rectifier/inverter (10) reaching the first predetermined threshold voltage, to charge the capacitance (C_{DC}) with a boosted rectified secondary voltage of the transformer (T) until the voltage of the capacitance (C_{DC}) reaches a second predetermined threshold voltage higher than the first predetermined threshold voltage.

## Description

### Field of the invention

The invention relates to a method for charging a capacitance connected between DC poles of a three-phase active rectifier/inverter, and a converter apparatus.

### Background of the invention

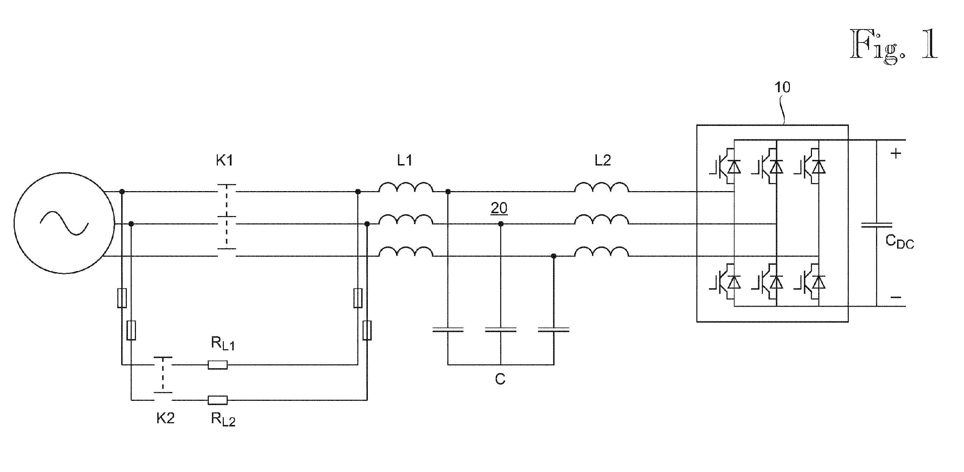

A converter such as a rectifier and/or inverter may have a capacitance connected between DC (Direct Current) poles of the converter. Figure 1 shows an example of a converter which is a three-phase active rectifier/inverter 10. The active rectifier/inverter can function as an active rectifier and as an inverter, i.e., it is able to rectify alternating current into direct current and convert direct current into alternating current. Sometimes an active rectifier/inverter is referred to as a mains inverter. The active rectifier/inverter 10 comprises a semiconductor bridge implemented by means of transistors, such as IGBTs (Insulated-gate Bipolar Transistor) or FETs (Field-Effect Transistor), or other controllable semiconductor switches, which are controlled according to a modulation scheme used.

The capacitance C_{DC} connected between the DC poles of the active rectifier/inverter 10 may need to be charged before the active rectifier/inverter is connected to an AC (Alternating Current) network in order to avoid a current surge upon the connection. Such a current surge may trigger protection of the system or disturb the feeding AC network, for example. The capacitance connected between the DC poles of the active rectifier/inverter may be charged to or close to a normal operating value of the capacitance. Such a normal operating value of the capacitance may correspond to a full-wave rectified voltage of the AC network, for example.

Such charging of the capacitance C_{DC} connected between the DC poles of the active rectifier/inverter 10 may be implemented by means of charging resistors by using one or more of the phases of the AC network. The example of Figure 1 shows two charging resistors R_{L1}, R_{L2}, which may be connected between the feeding AC network and the active rectifier/inverter 10 via an input filter 20 by using a switch K2. As a result, the capacitance C_{DC} connected between the DC poles of the active rectifier/inverter 10 may be charged via the charging resistors R_{L1}, R_{L2} before the main switch K1 is closed (switched on).

A problem related to the use of such charging resistors is that they need to be sized on a case-by-case basis. In particular, a cyclic use that requires frequent charging needs to be taken into account. In addition, such charging resistors may cause considerable losses during the charging.

### Brief description of the invention

An object of the invention is to provide a method and an apparatus for implementing the method so as to solve or at least alleviate the above problems. The object of the invention is achieved by a method, a computer program product, and a converter apparatus that are characterised by what is stated in the independent claims. Preferred embodiments of the invention are described in the dependent claims.

The invention is based on the idea of charging the capacitance connected between the DC poles of the active rectifier/inverter by the active rectifier/inverter fed via a step-down transformer with a rectified secondary voltage of the transformer until a voltage of the capacitance reaches a first predetermined threshold voltage and then charging the capacitance with a boosted rectified secondary voltage of the transformer until the voltage of the capacitance reaches a second predetermined threshold voltage higher than the first predetermined threshold voltage.

The solution of the invention provides the advantage that the capacitance connected between the DC poles of the active rectifier/inverter can be charged with smaller losses. In addition, the charging process can be better controlled, thus making the sizing of the components easier.

### Brief description of the figures

The invention will now be explained in greater detail in connection with preferred embodiments and with reference to the attached drawings, in which:
Figure 1 shows a circuit diagram of a converter system according to an embodiment;
Figure 2 shows a circuit diagram of a converter system according to an embodiment;
Figure 3 shows a circuit diagram of a converter system according to an embodiment; and
Figure 4 shows a circuit diagram of a converter system according to an embodiment.

### Detailed description of the invention

The application of the invention is not restricted to any specific system, but it may be applied to various converter systems. In addition, the use of the invention is not restricted to any system utilizing a specific basic frequency or to any specific voltage level.

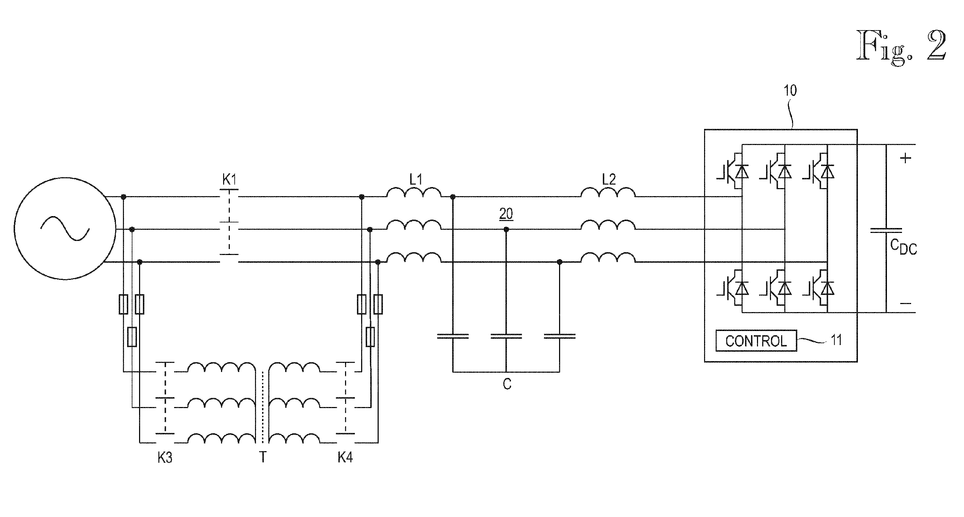

Figure 2 shows a circuit diagram of a main circuit of a converter system according to an exemplary embodiment. It should be noted that the figure merely illustrates components necessary for understanding the invention. The number of various components may vary from that shown in the figure. The exemplary converter is a three-phase active rectifier/inverter 10. An example of the three-phase active rectifier/inverter 10 is a semiconductor bridge implemented by means of six controllable semiconductor switches. Each of the six controllable semiconductor switches may have an antiparallel diode connected across the switch as illustrated. The controllable semiconductor switches may be transistors, such as IGBTs (Insulated-gate Bipolar Transistor) or FETs (Field-Effect Transistor), or other controllable semiconductor switches. The active rectifier/inverter 10 has positive and negative DC poles, between which a capacitance D_{DC} is connected. The capacitance D_{DC} may comprise one or more capacitors.

During normal operation of the active rectifier/inverter 10, the controllable semiconductor switches may be controlled in a suitable manner to rectify alternating current into direct current or to convert direct current into alternating current, depending on which direction electric power is to be transmitted. Figure 2 further shows a control arrangement 11 of the active rectifier/inverter 10 which can control the controllable semiconductor switches and thus the operation of the active rectifier/inverter 10, for example. The control connections between the control arrangement 11 and the controllable semiconductor switches are not shown for the sake of clarity. The control arrangement 11 can also control other operations of the active rectifier/inverter 10. The control arrangement 11 may perform measurements of or receive input signals regarding various quantities in order to perform the control of the active rectifier/inverter 10. Possible measuring arrangements for such quantities are not shown in the figure for the sake of clarity.

The converter system of Figure 2 further comprises a transformer T which is preferably a step-down transformer, i.e. its turns ratio α (α = N_{P}/N_{S}, where N_{P} is a number of turns in a primary winding and N_{S} is a number of turns in a secondary winding) is higher than unity (>1). Thus, the secondary voltage of the transformer T is lower than the primary voltage of the transformer. The turns ratio α of the transformer T depends on the converter system, but it may be between 2 and 10, for example. Preferably the turns ratio α of the transformer is about 5, whereby the resulting secondary voltage of the transformer T is about 20% of the primary voltage of the transformer T. According to an embodiment, the transformer T is a saturable transformer. The transformer T may thus preferably have a high stray reactance. The transformer T may be galvanically isolating as in the example of Figure 2. In the example of Figure 2, the terminals of the primary of the transformer are connected via a three-pole switch K3 to a connection point between a three-phase AC network and a three-pole main switch K1. Moreover, the terminals of the secondary of the transformer T are connected via a three-pole switch K4 to a connection point between the three-pole main switch K1 and a three-phase filter 20. Said connections may comprise fuses as illustrated. The switches K1, K3, K4 may be controllable by the active rectifier/inverter 10, or more specifically, the control arrangement 11 thereof, for example. The filter 20 included in the converter system preferably comprises inductance in each of the phases. Thus, the filter may be an L, LC or LCL type of filter, for example. The example of Figure 2 shows an LCL type of filter which comprises first phase specific inductances L1, second phase-specific inductances L2 and star-connected phase-specific capacitances C.

According to an embodiment, the charging of the capacitance C_{DC} connected between the DC poles of the three-phase active rectifier/inverter 10 comprises first connecting the AC poles of the active rectifier/inverter 10 to the three-phase AC network via the three-phase step-down transformer T and the three-phase filter 20 such that the AC network is connected to the primary of the transformer T, the secondary of the transformer T is connected to a first side of the filter 20 and a second side of the filter is connected to the AC poles of the active rectifier/inverter 10. In the example of Figure 2 this can be accomplished by closing (switching on) switches K3 and K4 and opening (switching off) the main switch K1. Next the capacitance C_{DC} connected between the DC poles of the active rectifier/inverter is charged by the active rectifier/inverter 10 with a rectified secondary voltage of the transformer T until a voltage of the capacitance C_{DC} reaches a first predetermined threshold voltage. According to an embodiment, the rectified secondary voltage of the transformer T is a full-wave rectified secondary voltage of the transformer T. In the example of Figure 2, this can be accomplished by controlling the semiconductor switches of the active rectifier/inverter 10 to be in an off state (non-conducting). Thus, the antiparallel diodes of the active rectifier/inverter 10 full-wave rectify the secondary voltage of the transformer T. Then, in response to the voltage of the capacitance C_{DC} reaching the first predetermined threshold voltage, the capacitance C_{DC} connected between the DC poles of the active rectifier/inverter is charged by the active rectifier/inverter 10 with a boosted rectified secondary voltage of the transformer T until the voltage of the capacitance C_{DC} reaches a second predetermined threshold voltage higher than the first predetermined threshold voltage. In the example of Figure 2, this can be accomplished by controlling the semiconductor switches of the active rectifier/inverter 10 in a suitable manner, e.g. by utilizing 3-phase pulse width modulation (PWM) of the semiconductor switches, such that the active rectifier/inverter 10 operates as a boost AC-to-DC converter (step-up AC-to-DC converter) which both rectifies and boosts the secondary voltage of the transformer T. With the boosting, the resulting rectified voltage provided to the capacitance C_{DC} is higher than with the passive rectification with the antiparallel diodes. The boosting is possible because of the inductance L1, L2 of the filter 20 connected between the active rectifier/inverter 10 and the transformer T.

According to an embodiment, the first predetermined threshold voltage corresponds to a full-wave rectified secondary voltage of the transformer T. Moreover, according to an embodiment, the second predetermined threshold voltage corresponds to a full-wave rectified voltage of the AC network. Thus, according to these embodiments, the capacitance C_{DC} connected between the DC poles of the active rectifier/inverter is charged with a rectified secondary voltage of the transformer T until the voltage of the capacitance C_{DC} reaches the full-wave rectified secondary voltage of the transformer T and then the capacitance C_{DC} is charged with a boosted rectified secondary voltage of the transformer T until the voltage of the capacitance C_{DC} reaches the full-wave rectified voltage of the AC network. This way the capacitance C_{DC} can be gradually charged to its normal operating state value. In addition, if the transformer T is saturable, it limits the current through the secondary of the transformer, which is desirable especially in the beginning of the charging. The first predetermined threshold voltage could also be lower than the full-wave rectified secondary voltage of the transformer T, i.e., the boost charging could be started already before the voltage of the capacitance C_{DC} reaches the full-wave rectified secondary voltage of the transformer T. In a similar manner, the second predetermined threshold voltage may differ from the full-wave rectified voltage of the AC network, for example, in a case, where the normal operating state value of the voltage of the capacitance C_{DC} is different from the full-wave rectified voltage of the AC network. In such a case, the second predetermined threshold voltage preferably corresponds to the normal operating state value of the voltage of the capacitance C_{DC}.

According to an embodiment, the level of the boosting of the rectified secondary voltage of the transformer T may be gradually increased when charging the capacitance C_{DC} with the boosted rectified secondary voltage of the transformer T. Thus, it is possible to gradually raise the charging voltage by varying the level of the boosting and thus make the charging more controlled. According to an embodiment, the rectified secondary voltage of the transformer T is boosted at least up to a full-wave rectified voltage of the AC network. That way the voltage of the capacitance C_{DC} can eventually reach at least the level of the full-wave rectified voltage of the AC network.

According to an embodiment, in response to the voltage of the capacitance C_{DC} reaching the second predetermined threshold voltage, the AC network is connected to the first side of the filter 20. In the example of Figure 2, this can be accomplished by closing (switching on) the main switch K1. Moreover, according to an embodiment, in response to the voltage of the capacitance reaching the second predetermined threshold voltage, the primary of the transformer and/or the secondary of the transformer is disconnected. In the example of Figure 2, this can be accomplished by opening (switching off) at least one of the switches K3 and K4. Preferably both switches K3 and K4 are opened. The order in which the main switch K1 is closed and at least one of the switches K3 and K4 is opened may vary. Because the charging has been performed by feeding the active rectifier/inverter 10 through the filter 20, the capacitors C of the filter 20 have settled to the frequency of the feeding AC network. As a result, when the main switch K1 is closed after the charging is finished, the filter 20 does not cause a current surge, which is an additional advantage.

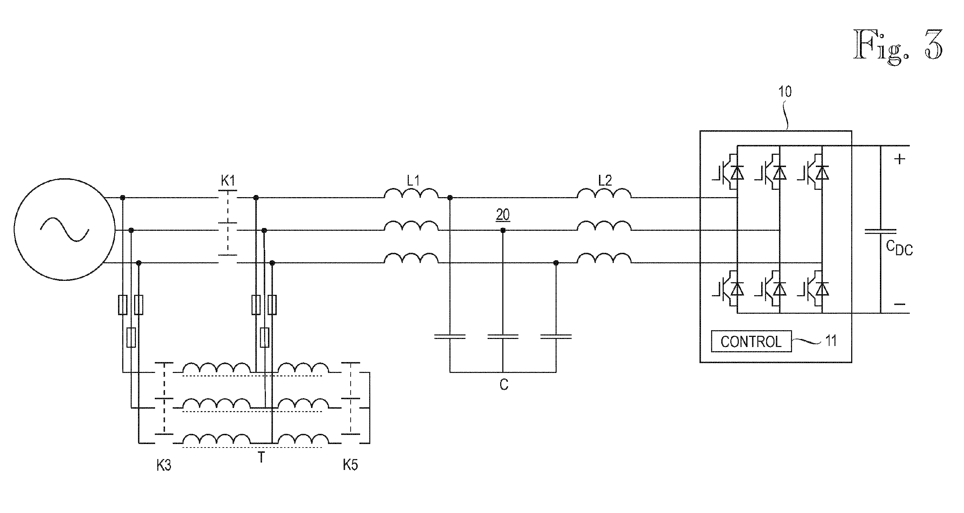

As an alternative to a galvanically isolating transformer as illustrated in the example of Figure 2, it is possible to use an autotransformer instead. Figure 3 shows a circuit diagram of a main circuit of a converter system according to an exemplary embodiment. The converter system of Figure 3 corresponds to that of Figure 2, but the transformer T of Figure 3 is an autotransformer. According to an embodiment, in the example of Figure 3, the charging of the capacitance C_{DC} can be accomplished by closing (switching on) switches K3 and K5 and opening (switching off) the main switch K1. Next, the capacitance C_{DC} connected between the DC poles of the active rectifier/inverter is charged by the active rectifier/inverter 10 with a rectified secondary voltage of the transformer T until a voltage of the capacitance C_{DC} reaches the first predetermined threshold voltage. Then, in response to the voltage of the capacitance C_{DC} reaching the first predetermined threshold voltage, the capacitance C_{DC} connected between the DC poles of the active rectifier/inverter is charged by the active rectifier/inverter 10 with a boosted rectified secondary voltage of the transformer T until the voltage of the capacitance C_{DC} reaches a second predetermined threshold voltage. According to an embodiment, in response to the voltage of the capacitance C_{DC} reaching the second predetermined threshold voltage, the main switch K1 may be closed and the transformer switches K3 and K5 may be opened. The order in which the main switch K1 is closed and the transformer switches K3 and K5 are opened may vary.

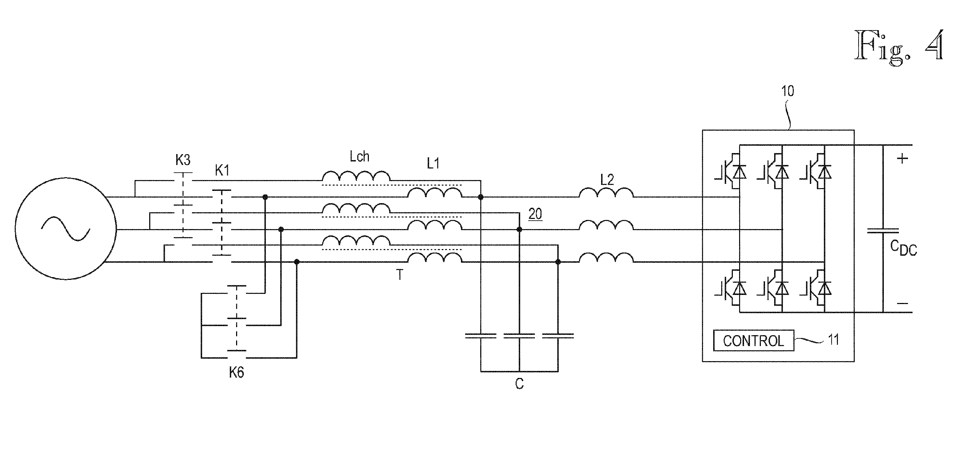

Figure 4 shows a circuit diagram of a main circuit of a converter system according to an exemplary embodiment. The converter system of Figure 4 corresponds to that of Figure 3, but the autotransformer is implemented by utilizing the first phase-specific inductances L1 of the filter 20 such that the inductances L1 of the filter also function as the secondary windings of the transformer T. Inductances Lch are the primary windings of the transformer T. According to an embodiment, in the example of Figure 4, the charging of the capacitance C_{DC} can be accomplished by closing (switching on) switches K3 and K6 and opening (switching off) the main switch K1. Next, the capacitance C_{DC} connected between the DC poles of the active rectifier/inverter is charged by the active rectifier/inverter 10 with a rectified secondary voltage of the transformer T until a voltage of the capacitance C_{DC} reaches the first predetermined threshold voltage. Then, in response to the voltage of the capacitance C_{DC} reaching the first predetermined threshold voltage, the capacitance C_{DC} connected between the DC poles of the active rectifier/inverter is charged by the active rectifier/inverter 10 with a boosted rectified secondary voltage of the transformer T until the voltage of the capacitance C_{DC} reaches a second predetermined threshold voltage. According to an embodiment, in response to the voltage of the capacitance C_{DC} reaching the second predetermined threshold voltage, the main switch K1 may be closed and the transformer switches K3 and K6 may be opened. The order in which the main switch K1 is closed and the transformer switches K3 and K6 are opened may vary. However, it is preferable to first open transformer switch K3, whereby inductances L1 settle to a synchronous voltage with the AC network according to the voltage division Lch, C and L2.

The control of the switches K1 to K6 and/or the semiconductor switches of the active rectifier/inverter 10 according to the various embodiments described above can be performed by or via the control arrangement 11, which can also perform, for example, the normal modulation control of the switches of the active rectifier/inverter 10. It is also possible to use additional or separate logical or physical units (not shown) for performing the control functionality of the invention. The functionality of the invention could, for example, be implemented using a separate logic arrangement, which could be independent of the normal modulation control of the switches of the active rectifier/inverter 10, for example.

The control arrangement 11 and/or a separate logic arrangement controlling the switches K1 to K6 and/or the controllable semiconductor switches of the active rectifier/inverter 10 according to any one of the embodiments, or a combination thereof, can be implemented as one unit or as two or more separate units that are configured to implement the functionality of the various embodiments. Here the term 'unit' refers generally to a physical or logical entity, such as a physical device or a part thereof or a software routine. The control arrangement 11 according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing a storage area for arithmetical operations, and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, may further comprise suitable input means for receiving measurement and/or control data, for example, and output means for outputting control data, for example. It is also possible to use analog circuits, programmable logic devices (PLD), or discrete electric components and devices for implementing the functionality according to any one of the embodiments. For example, the control arrangement 11 according to any one of the embodiments may be implemented at least partly by means of such analog circuits or programmable logic devices.

The invention can be implemented in existing system elements or by using separate dedicated elements or devices in a centralized or distributed manner. Present converter devices, for example, can comprise programmable logic devices, or processors and memory that can be utilized in the functions according to embodiments of the invention. Thus, all modifications and configurations required for implementing an embodiment e.g. in existing converters may be performed as software routines, which may be implemented as added or updated software routines. If at least part of the functionality of the invention is implemented by software, such software can be provided as a computer program product comprising computer program code which, when run on a computer, causes the computer or a corresponding arrangement to perform the functionality according to the invention as described above. Such a computer program code may be stored or generally embodied on a computer readable medium, such as a suitable memory, a flash memory or an optical memory, for example, from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that, as technology advances, the basic idea of the invention may be implemented in various ways. The invention and its embodiments are thus not restricted to the above examples but may vary within the scope of the claims.

## Claims

1. A method for charging a capacitance connected between DC poles of a three-phase active rectifier/inverter, **characterised in that** the method comprises:
connecting AC poles of the active rectifier/inverter (10) to a three-phase AC network via a three-phase step-down transformer (T) and a three-phase filter (20) comprising inductance (L1, L2) in each of the phases such that the AC network is connected to a primary of the transformer (T), a secondary of the transformer (T) is connected to a first side of the filter (20) and a second side of the filter (20) is connected to the AC poles of the active rectifier/inverter (10);
charging the capacitance (C_{DC}) connected between the DC poles of the active rectifier/inverter by the active rectifier/inverter (10) with a rectified secondary voltage of the transformer (T) until a voltage of the capacitance reaches a first predetermined threshold voltage; and
in response to the voltage of the capacitance (C_{DC}) connected between the DC poles of the active rectifier/inverter reaching the first predetermined threshold voltage, charging the capacitance by the active rectifier/inverter (10) with a boosted rectified secondary voltage of the transformer (T) until the voltage of the capacitance reaches a second predetermined threshold voltage higher than the first predetermined threshold voltage.

2. A method according to claim 1, **characterised in that** the method comprises:
in response to the voltage of the capacitance (C_{DC}) reaching the second predetermined threshold voltage, connecting the AC network to the first side of the filter (20).

3. A method according to claim 1 or 2, **characterised in that** the method comprises:
in response to the voltage of the capacitance (C_{DC}) reaching the second predetermined threshold voltage, disconnecting the primary of the transformer (T) and/or the secondary of the transformer.

4. A method according to claim 1, 2 or 3, **characterised in that** the first predetermined threshold voltage corresponds to a full-wave rectified secondary voltage of the transformer (T).

5. A method according to any one of claims 1 to 4, **characterised in that** the second predetermined threshold voltage corresponds to a full-wave rectified voltage of the AC network.

6. A method according to any one of claims 1 to 5, **characterised in that** a level of the boosting of the rectified secondary voltage of the transformer (T) is gradually increased, when charging the capacitance (C_{DC}) with the boosted rectified secondary voltage of the transformer.

7. A method according to claim 6, **characterised in that** the rectified secondary voltage of the transformer (T) is boosted at least up to a full-wave rectified voltage of the AC network.

8. A computer program product comprising computer program code, wherein execution of the program code on a computer causes the computer to carry out the steps of the method according to any one of claims 1 to 7.

9. A converter apparatus comprising:
a three-phase active rectifier/inverter (10) having a capacitance (C_{DC}) connected between DC poles thereof;
a three-phase filter (20) comprising inductance (L1, L2) in each of the phases; and
a three-phase step-down transformer (T), **characterised in that** the apparatus comprises:
switching means (K1, K2, K3, K4, K5, K6) configured to connect AC poles of the active rectifier/inverter (10) to a three-phase AC network via the three-phase step-down transformer (T) and the three-phase filter (20) such that the AC network is connected to a primary of the transformer (T), a secondary of the transformer (T) is connected to a first side of the filter (20) and a second side of the filter (20) is connected to the AC poles of the active rectifier/inverter (10), and **in that**
the active rectifier/inverter (10) is configured to:
charge the capacitance (C_{DC}) connected between the DC poles of the active rectifier/inverter with a rectified secondary voltage of the transformer (T) until a voltage of the capacitance reaches a first predetermined threshold voltage; and
in response to the voltage of the capacitance (C_{DC}) connected between the DC poles of the active rectifier/inverter (10) reaching the first predetermined threshold voltage, charge the capacitance (C_{DC}) with a boosted rectified secondary voltage of the transformer (T) until the voltage of the capacitance (C_{DC}) reaches a second predetermined threshold voltage higher than the first predetermined threshold voltage.

10. A converter apparatus according to claim 9, **characterised in that** the switching means (K1, K2, K3, K4, K5, K6) are configured to, in response to the voltage of the capacitance (C_{DC}) reaching the second predetermined threshold voltage, connect the AC network to the first side of the filter (20).

11. A converter apparatus according to claim 9 or 10, **characterised in that** the switching means (K1, K2, K3, K4, K5, K6) are configured to, in response to the voltage of the capacitance (C_{DC}) reaching the second predetermined threshold voltage, disconnect the primary of the transformer (T) and/or the secondary of the transformer (T).

12. A converter apparatus according to claim 9, 10 or 11, **characterised in that** the first predetermined threshold voltage corresponds to a full-wave rectified secondary voltage of the transformer (T).

13. A converter apparatus according to any one of claims 9 to 12, **characterised in that** the second predetermined threshold voltage corresponds to a full-wave rectified voltage of the AC network.

14. A converter apparatus according to any one of claims 9 to 13, **characterised in that** the active rectifier/inverter (10) is configured to gradually increase a level of the boosting of the rectified secondary voltage of the transformer (T) when charging the capacitance (C_{DC}) with the boosted rectified secondary voltage of the transformer.

15. A converter apparatus according to claim 14, **characterised in that** the active rectifier/inverter (10) is configured to boost the rectified secondary voltage of the transformer (T) at least up to a full-wave rectified voltage of the AC network.
